# FASCICULE DE BREVET EUROPEEN

(11) **EP 4 626 753 B1**
(45) Date de publication et mention de la délivrance du brevet: **25.11.2026**
(21) Numéro de dépôt: 23806359.8
(22) Date de dépôt: 25.10.2023
(51) Int. Cl.: B60R 5/04, B60R 13/01, B60R 13/02

(54) **VÉHICULE COMPORTANT UN COFFRE À ÉLÉMENTS DE FIXATION DE SUPPORTS DE PANNEAU DE SUPPORT INVISIBLES**
FAHRZEUG MIT EINEM KOFFERRAUM MIT ELEMENTEN ZUR MONTAGE UNSICHTBARER TRÄGERPLATTENTRÄGER
VEHICLE COMPRISING A TRUNK WITH ELEMENTS FOR MOUNTING INVISIBLE SUPPORT PANEL SUPPORTS

(30) Priorité: 29.11.2022 FR 2212494
(43) Date de publication de la demande: 08.10.2025
(73) Titulaire: Stellantis Auto SAS, 78300 Poissy (FR)
(72) Inventeur: RIVIERRE, Laurent, 75015 PARIS (FR)
(74) Mandataire: BCIP
(86) Numéro de dépôt international: PCT/FR2023/051676
(87) Numéro de publication internationale: WO 2024/115828

(56) Documents cités:
- US-B2- 9 073 495

## Description

### Domaine technique de l'invention

La présente invention revendique la priorité de la demande française 2212494 déposée le 29 novembre 2022.

L'invention concerne les véhicules comprenant un coffre logeant un panneau de support constituant un faux plancher.

### Etat de la technique

Certains véhicules, généralement de type automobile, comprennent un coffre comprenant un logement inférieur, accueillant généralement une roue de secours, et masqué par un panneau de support constituant un faux plancher amovible. Ce panneau de support est parfois supporté par deux supports, droit et gauche, qui sont couplés respectivement à des faces internes de deux panneaux latéraux d'habillage, droit et gauche, délimitant le coffre sur deux côtés longitudinaux intérieurs et comportant également des faces externes situées en regard respectivement de deux autres supports, droit et gauche, solidarisés fixement à la structure du véhicule.

US9073495B2, qui est considéré comme l'état de la technique le plus proche de l'objet de la revendication 1, divulgue: véhicule comprenant un coffre délimité sur deux côtés longitudinaux intérieurs par deux panneaux latéraux d'habillage ayant des premières faces externes placées en regard respectivement de deux premiers supports et des premières faces internes placées en regard respectivement de deux seconds supports supportant un panneau de support propre à supporter au moins un objet, dont chaque second première support comprend une extrémité arrière munie d'au moins une protubérance de couplage.

Comme il est indispensable que chaque support du panneau de support soit fixé suivant les directions longitudinale et transversale du véhicule, les deux panneaux latéraux d'habillage comprennent des premiers éléments de fixation transversaux et longitudinaux sur leurs faces internes.

Les premiers éléments de fixation transversaux sont définis sur des parties longitudinales des panneaux latéraux d'habillage et coopèrent avec des seconds éléments de fixation transversaux qui sont généralement rapportés sur les faces externes des supports du panneau de support. Ces premiers éléments de fixation transversaux sont généralement des trous de clippage qui reçoivent des pattes de clippage constituant les seconds éléments de fixation transversaux. Les premiers et seconds éléments de fixation transversaux sont donc invisibles dans l'espace de rangement du coffre.

Les premiers éléments de fixation longitudinaux sont actuellement rapportés et solidarisés fixement à des parties transversales (ou arrière) des panneaux latéraux d'habillage, qui sont situées en entrée de coffre. Ces premiers éléments de fixation longitudinaux ne pouvant être installés que sur les chaînes de montage des véhicules, leur installation augmente le temps nécessaire à la fabrication de ces derniers et donc aussi le coût de ces véhicules. En outre, comme ils sont visibles dans l'espace de rangement du coffre, ils dégradent la qualité perçue.

L'invention a donc notamment pour but d'améliorer la situation.

### Présentation de l'invention

Elle propose notamment à cet effet un véhicule comprenant un coffre délimité sur deux côtés longitudinaux intérieurs par deux panneaux latéraux d'habillage ayant des premières faces externes placées en regard respectivement de deux premiers supports et des premières faces internes placées en regard respectivement de deux seconds supports supportant un panneau de support propre à supporter au moins un objet.

Ce véhicule se caractérise par le fait que chaque second support comprend une extrémité arrière munie d'au moins une protubérance de couplage traversant un trou traversant correspondant, défini dans une partie arrière du panneau latéral d'habillage associé, et coopérant avec un élément de couplage correspondant, défini dans une partie arrière du premier support associé, pour participer à une immobilisation de ce second support par rapport au premier support.

Grâce à l'invention, il n'y a désormais plus besoin de rapporter des moyens de fixation, assurant la fixation des extrémités arrière des seconds support sur les parties arrière des premiers supports, et donc le nombre d'opérations d'assemblage devant être effectuées pour fabriquer un véhicule est réduit, ce qui réduit également le coût de ce dernier.

Le véhicule selon l'invention peut comporter d'autres caractéristiques qui peuvent être prises séparément ou en combinaison, et notamment :
- l'extrémité arrière de chaque second support peut être munie de deux protubérances de couplage traversant respectivement deux trous traversants correspondants, définis dans la partie arrière du panneau latéral d'habillage associé, et coopérant respectivement avec deux éléments de couplage correspondants, définis dans la partie arrière du premier support ;
- chaque protubérance de couplage peut comprendre un logement ouvert qui loge une protubérance de retenue que comprend l'élément de couplage correspondant ;
- chaque protubérance de couplage peut comprendre une première partie érigée sur une seconde face externe de son second support, orientée vers la première face interne du panneau latéral d'habillage correspondant, et prolongée vers l'arrière suivant une direction longitudinale du véhicule par une seconde partie coopérant avec l'élément de couplage correspondant, de sorte que cette seconde partie soit décalée d'une distance choisie suivant une direction transversale du véhicule par rapport à la seconde face externe ;
- chaque second support peut comprendre une seconde face externe, orientée vers la première face interne du panneau latéral d'habillage correspondant, et munie d'au moins deux premiers éléments de fixation coopérant chacun avec un second élément de fixation correspondant, défini sur la première face interne du panneau latéral d'habillage associé, pour participer à une immobilisation du second support par rapport à ce panneau latéral d'habillage associé ;
- en présence de la dernière option, chaque premier élément de fixation peut faire partie intégrante de la seconde face externe de son second support et peut être agencé sous la forme d'une patte de clippage clippée dans un trou de clippage constituant un second élément de fixation correspondant ;
- en variante, chaque premier élément de fixation peut être rapporté fixement sur la seconde face externe de son second support et peut être introduit dans un trou de clippage constituant un second élément de fixation correspondant ;
- la seconde face externe de chaque second support peut comprendre dans une moitié supérieure au moins deux premiers éléments de fixation et dans une moitié inférieure au moins deux autres premiers éléments de fixation ;
- il peut être de type automobile.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue en perspective du côté arrière, une partie d'un coffre arrière d'un exemple de réalisation d'un véhicule selon l'invention,
[Fig. 2] illustre schématiquement, dans une vue de face du côté interne, un second support du coffre arrière de la figure 1,
[Fig. 3] illustre schématiquement, dans une vue de face du côté externe, le second support de la figure 2,
[Fig. 4] illustre schématiquement, dans une vue en perspective du côté externe, le couplage entre le panneau latéral d'habillage droit et le premier support droit du coffre arrière de la figure 1,
[Fig. 5] illustre schématiquement, dans une vue de face du côté interne, le couplage entre le panneau latéral d'habillage droit et les premier support droit et second support droit du coffre arrière de la figure 1,
[Fig. 6] illustre schématiquement, dans une vue en perspective du côté interne, le couplage entre le second support droit et la partie arrière du panneau latéral d'habillage droit de la figure 1,
[Fig. 7] illustre schématiquement, dans une vue en perspective du côté arrière et partiellement en coupe dans un plan horizontal, le couplage entre le second support droit et les parties arrière du panneau latéral d'habillage droit et du premier support droit du coffre arrière de la figure 1,
[Fig. 8] illustre schématiquement, dans une vue en perspective du côté arrière, le couplage entre le premier support droit et les parties arrière du panneau latéral d'habillage droit et du premier support droit du coffre arrière de la figure 1,
[Fig. 9] illustre schématiquement, dans une vue en perspective du côté arrière, une protubérance de couplage du second support droit du coffre arrière de la figure 1, et
[Fig. 10] illustre schématiquement, dans une vue en perspective du côté externe, un premier élément de fixation transversal du second support droit du coffre arrière de la figure 1.

### Description détaillée de l'invention

L'invention a notamment pour but de proposer un véhicule comprenant un coffre CV à éléments de fixation de premiers supports S1 d'un panneau de support PS invisibles.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule (terrestre, maritime (ou fluvial), ou aérien) comprenant un coffre comportant des supports supportant un panneau de support amovible et masquant un logement inférieur.

Par ailleurs, on considère dans ce qui suit, à titre d'exemple non limitatif, que le coffre CV est défini dans une partie arrière du véhicule. Mais cela n'est pas obligatoire. En effet, il pourrait être défini dans une partie avant du véhicule.

De plus, dans ce qui suit et ce qui précède la notion « d'interne » désigne une face d'un élément qui est orientée vers l'intérieur du coffre CV, tandis que la notion « d'externe » désigne une face d'un élément qui est orientée vers l'extérieur du coffre CV et donc opposée à sa face interne.

En outre, dans ce qui suit et ce qui précède la notion « d'avant » désigne une partie d'un élément qui est orientée vers l'avant du véhicule, tandis que la notion « d'arrière » désigne une partie d'un élément qui est orientée vers l'arrière du véhicule et donc opposée à la face interne de cet élément.

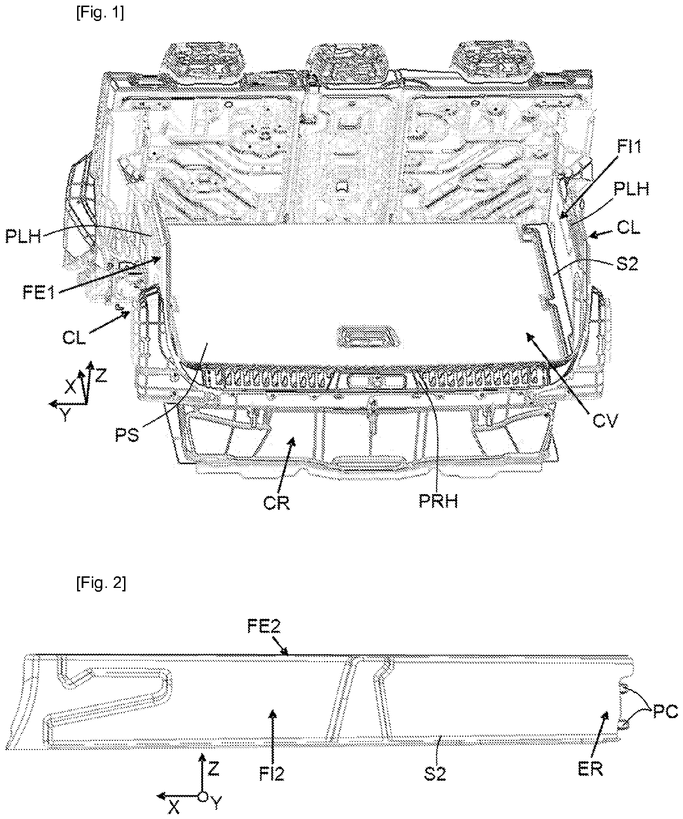

Sur les figures 1 à 10 la direction X est la direction longitudinale du véhicule, laquelle est parallèle aux côtés latéraux (ou longitudinaux) comportant les portières latérales, la direction Y est la direction transversale du véhicule, laquelle est perpendiculaire à la direction longitudinale X, et la direction Z est la direction verticale du véhicule, laquelle est perpendiculaire aux directions longitudinale X et transversale Y.

On a schématiquement illustré sur la figure 1, au moins partiellement, une partie d'un coffre CV (ici arrière) d'un véhicule comprenant deux côtés longitudinaux intérieurs CL, droit et gauche, délimités par deux panneaux latéraux d'habillage PLH, droit et gauche, ayant des premières faces internes FI1 placées en regard respectivement de deux (seconds) supports S2 supportant un panneau de support PS.

Le panneau de support PS est propre à supporter au moins un objet et est destiné à masquer un logement inférieur du coffre CV qui peut, par exemple, accueillir une roue de secours et/ou une trousse à outils et/ou une trousse de secours et/ou un triangle de sécurité. Ce panneau de support PS constitue donc un faux plancher amovible.

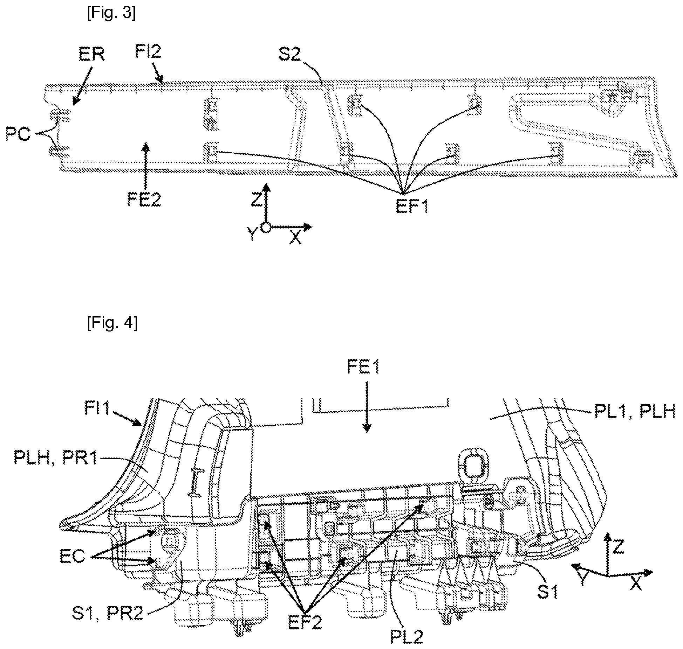

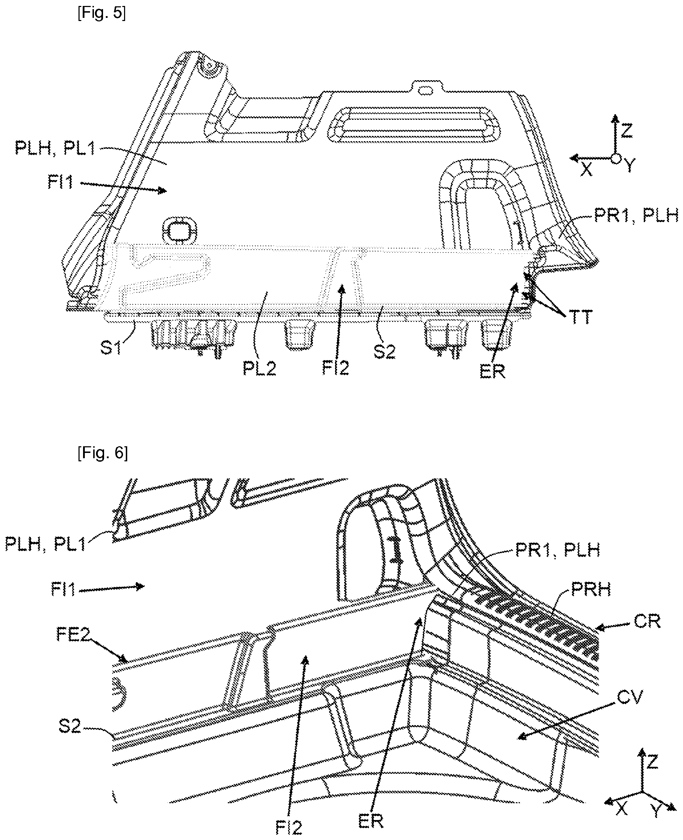

Comme illustré au moins partiellement sur les figures 4 et 5, les deux panneaux latéraux d'habillage PLH, droit et gauche, ont également des premières faces externes FE1 opposées à leurs premières faces internes FI1 placées en regard respectivement de deux (premiers) supports S1, droit et gauche, eux-mêmes solidarisés fixement à la structure du véhicule. On comprendra que chaque panneau latéral d'habillage PLH est au final pris en sandwich entre un premier support S1 et un second support S2 correspondant lorsque ces derniers (S1 et S2) sont solidarisés l'un à l'autre (comme on le verra plus loin).

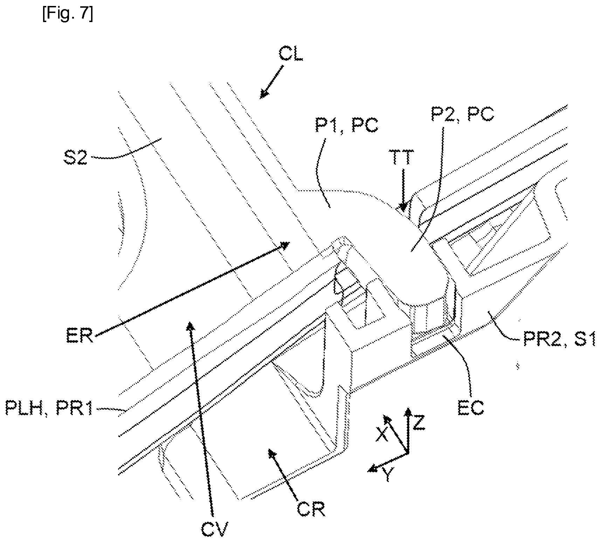

Egalement comme illustré au moins partiellement sur les figures 4 et 5, chacun des panneaux latéraux d'habillage PLH comprend une partie longitudinale PL1 qui est installée sur l'un des deux côtés latéraux intérieurs CL du coffre CV, et une partie arrière PR1 qui prolonge l'extrémité arrière de cette partie longitudinale PL et est installée sur une petite partie du côté arrière CR du coffre CV. De plus, la partie arrière PR1 de chaque panneau latéral d'habillage PLH comprend au moins un trou traversant TT dont on comprendra l'utilité plus loin (voir figures 5 et 7).

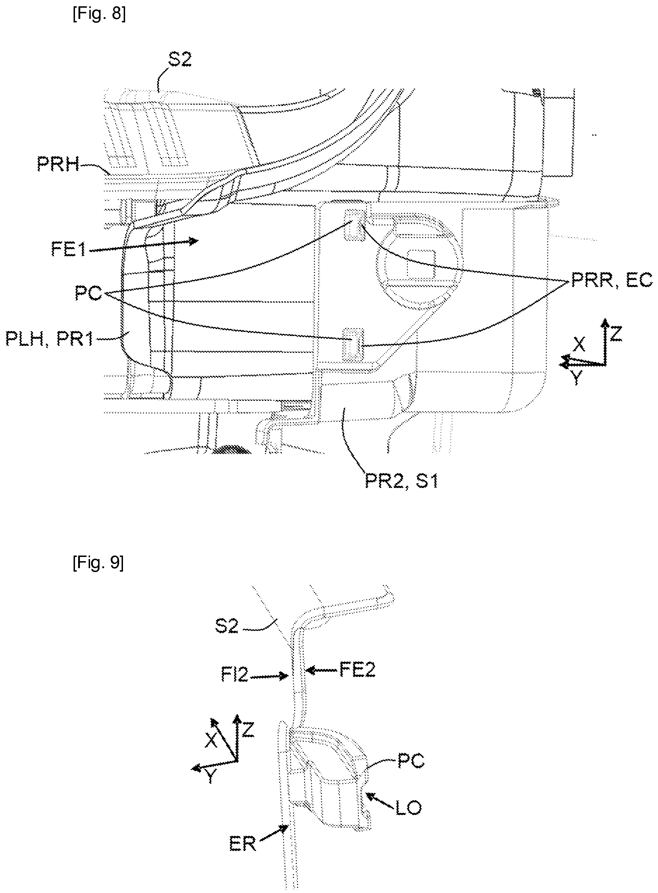

Les parties arrière PR1 des panneaux latéraux d'habillage PLH, droit et gauche, ont des interfaces avec respectivement des extrémités droite et gauche d'un panneau arrière d'habillage PRH (voir figures 6 et 8).

Comme illustré au moins partiellement sur les figures 4 et 5, chacun des premiers supports S1 comprend une partie longitudinale PL2 qui est installée sur l'un des deux côtés latéraux intérieurs CL du coffre CV et à laquelle est couplée la partie longitudinale PL1 du panneau latéral d'habillage PLH associé, et une partie arrière PR2 qui prolonge l'extrémité arrière de cette partie longitudinale PL, est installée sur une petite partie du côté arrière CR du coffre CV, et à laquelle est couplée la partie arrière PR1 du panneau latéral d'habillage PLH associé, comme on le verra plus loin. De plus, la partie arrière PR2 de chaque premier support S1 comprend au moins un élément de couplage EC dont on comprendra l'utilité plus loin.

Comme illustré au moins partiellement sur les figures 2, 3, 7 et 8, chaque second support S2 comprend une extrémité arrière ER qui est munie d'au moins une protubérance de couplage PC traversant un trou traversant TT correspondant, défini dans la partie arrière PR1 du panneau latéral d'habillage PLH associé. Chaque protubérance de couplage PC est agencée de manière à coopérer avec un élément de couplage EC correspondant, défini dans la partie arrière PR2 du premier support S1 associé, pour participer à l'immobilisation de son second support S2 par rapport au premier support S1 associé (voir figures 7 et 8).

Ainsi, il n'y a plus de moyen de fixation, assurant la fixation suivant la direction longitudinale X de l'extrémité arrière ER d'un second support S2 à la partie arrière PR2 du premier support S1, qui doit être rapporté. Cela permet de réduire le nombre d'opérations d'assemblage devant être effectuées pour fabriquer un véhicule et donc réduit le coût de ce dernier.

En outre, aucun moyen de fixation n'étant visible au niveau de l'entrée du coffre CV, cela donne aux usagers du véhicule une impression de qualité et d'ingéniosité.

On comprendra que chaque protubérance de couplage PC fait partie intégrante de son second support S2.

On notera que dans l'exemple illustré non limitativement et au moins partiellement sur les figures 2 à 5 l'extrémité arrière ER de chaque second support S2 est munie de deux protubérances de couplage PC traversant respectivement deux trous traversants TT correspondants, définis dans la partie arrière PR1 du panneau latéral d'habillage PLH associé. Dans ce cas, ces deux protubérances de couplage PC coopèrent respectivement avec deux éléments de couplage EC correspondants, qui sont définis dans la partie arrière PR2 du premier support S1 associé.

Mais le nombre de protubérances de couplage PC de chaque second support S2, tout comme le nombre de trous traversants TT et le nombre d'éléments de couplage EC, peut prendre n'importe quelle valeur supérieure ou égale à un. L'utilisation d'au moins deux protubérances de couplage PC est avantageuse du fait qu'elle empêche la rotation d'un second support S2 par rapport au premier support S1 associé.

Par exemple, et comme illustré non limitativement sur les figures 8 et 9, chaque protubérance de couplage PC peut comprendre un logement ouvert LO qui loge une protubérance de retenue PRR que comprend l'élément de couplage EC correspondant. Dans ce cas, chaque protubérance de couplage PC définit ce que l'homme de l'art appelle parfois un « empiochage ».

Mais d'autres types de couplage permettant d'assurer une partie au moins de la fixation de l'extrémité ER d'un second support S2 par rapport au premier support S1 associé peuvent être envisagés, et notamment un couplage par clippage.

Egalement par exemple, et comme illustré non limitativement sur la figure 8, chaque protubérance de couplage PC peut comprendre des première P1 et seconde P2 parties qui se prolongent mutuellement. Chaque première partie P1 est érigée sur une seconde face externe FE2 de son second support S2 et orientée vers la première face interne FI1 de la partie longitudinale PL1 du panneau latéral d'habillage PLH correspondant. Chaque seconde partie P2 prolonge vers l'arrière la première partie P1 suivant la direction longitudinale X et est agencée de manière à coopérer avec l'élément de couplage EC correspondant. Ainsi, la seconde partie P2 de chaque protubérance de couplage PC est décalée d'une distance choisie suivant la direction transversale Y par rapport à la seconde face externe FE2. Cela permet d'avoir toujours le bord de découpe du trou traversant TT de la partie arrière PR1 du panneau latéral d'habillage PLH associé qui est invisible dans le coffre CV.

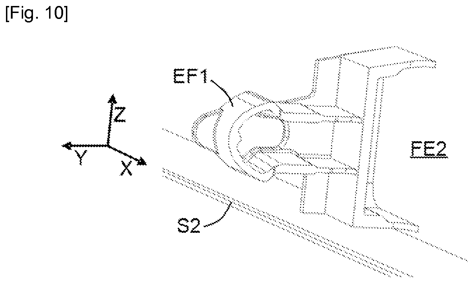

Egalement par exemple, et comme illustré non limitativement sur les figures 3 et 10, chaque second support S2 peut comprendre une seconde face externe FE2, orientée vers la première face interne FI1 du panneau latéral d'habillage PLH correspondant, et munie d'au moins deux premiers éléments de fixation EF1. Chaque premier élément de fixation EF1 est agencé de manière à coopérer avec un second élément de fixation EF2 correspondant, défini sur la première face interne FI1 de la partie longitudinale PL1 du panneau latéral d'habillage PLH associé, pour participer à l'immobilisation suivant la direction transversale Y du second support S2 par rapport à ce panneau latéral d'habillage PLH associé.

Ainsi, les premiers éléments de fixation EF1 transversaux et les seconds éléments de fixation EF2 transversaux sont totalement invisibles dans l'espace de rangement du coffre CV, ce qui renforce encore plus l'impression de qualité et d'ingéniosité du véhicule.

Dans un premier mode de réalisation illustré non limitativement sur les figures 3 et 10, chaque premier élément de fixation EF1 transversal peut faire partie intégrante de la seconde face externe FE2 de son second support S2, ce qui facilite l'assemblage. Dans ce cas, chaque premier élément de fixation EF1 transversal peut être agencé sous la forme d'une patte de clippage qui est clippée dans un trou de clippage constituant un second élément de fixation EF2 transversal correspondant (voir figure 4).

Dans un second mode de réalisation (non illustré), chaque premier élément de fixation EF1 transversal peut être rapporté fixement sur la seconde face externe FE2 de son second support S2. Dans ce cas, chaque premier élément de fixation EF1 transversal peut être introduit dans un trou de clippage constituant un second élément de fixation EF2 correspondant. A titre d'exemple, chaque premier élément de fixation EF1 transversal peut être une agrafe déformable que l'on introduit suivant la direction transversale Y dans le trou de clippage EF2 correspondant pour immobiliser transversalement la partie longitudinale PL1 du second support S2 concerné par rapport la partie longitudinale PL1 du panneau latéral d'habillage PLH associé.

On notera que dans l'exemple illustré non limitativement sur la figure 3 la seconde face externe FE2 de chaque second support S2 comprend dans une moitié supérieure au moins deux premiers éléments de fixation EF1 transversaux, et dans une moitié inférieure au moins deux autres premiers éléments de fixation EF1 transversaux. Plus précisément, la moitié supérieure de la seconde face externe FE2 comprend ici quatre premiers éléments de fixation EF1 transversaux, et la moitié inférieure de la seconde face externe FE2 comprend ici cinq autres premiers éléments de fixation EF1 transversaux. Cela permet d'avoir une immobilisation très précise et surtout très bien répartie de chaque second support S2. Mais, le nombre de premiers éléments de fixation EF1 transversaux que comprend la seconde face externe FE2 de chaque second support S2 peut prendre n'importe quelle valeur supérieure ou égale à un.

L'installation d'un second support S2 peut se faire en faisant tout d'abord traverser chaque protubérance de couplage PC au travers du trou traversant TT correspondant de la partie arrière PR1 du panneau latéral d'habillage PLH associé, jusqu'à ce que chaque protubérance de couplage PC coopère avec l'élément de couplage EC correspondant défini dans la partie arrière PR2 du premier support S1 associé. Puis, on plaque ce second support S2 contre le premier support S1 associé en faisant coopérer ensemble leurs premiers EF1 et seconds EF2 éléments de fixation.

## Revendications

1. Véhicule comprenant un coffre (CV) délimité sur deux côtés longitudinaux intérieurs (CL) par deux panneaux latéraux d'habillage (PLH) ayant des premières faces externes (FE1) placées en regard respectivement de deux premiers supports (S1) et des premières faces internes (FI1) placées en regard respectivement de deux seconds supports (S2) supportant un panneau de support (PS) propre à supporter au moins un objet, **caractérisé en ce que** chaque second support (S2) comprend une extrémité arrière (ER) munie d'au moins une protubérance de couplage (PC) traversant un trou traversant (TT) correspondant, défini dans une partie arrière (PR1) du panneau latéral d'habillage (PLH) associé, et coopérant avec un élément de couplage (EC) correspondant, défini dans une partie arrière (PR2) du premier support (S1) associé, pour participer à une immobilisation dudit second support (S2) par rapport audit premier support (S1).

2. Véhicule selon la revendication 1, **caractérisé en ce que** ladite extrémité arrière (ER) de chaque second support (S2) est munie de deux protubérances de couplage (PC) traversant respectivement deux trous traversants (TT) correspondants, définis dans ladite partie arrière (PR1) du panneau latéral d'habillage (PLH) associé, et coopérant respectivement avec deux éléments de couplage (EC) correspondants, définis dans ladite partie arrière (PR2) du premier support (S1).

3. Véhicule selon la revendication 1 ou 2, **caractérisé en ce que** chaque protubérance de couplage (PC) comprend un logement ouvert (LO) logeant une protubérance de retenue (PRR) que comprend ledit élément de couplage (EC) correspondant.

4. Véhicule selon l'une des revendications 1 à 3, **caractérisé en ce que** chaque protubérance de couplage (PC) comprend une première partie (P1) érigée sur une seconde face externe (FE2) de son second support (S2), orientée vers ladite première face interne (FI1) du panneau latéral d'habillage (PLH) correspondant, et prolongée vers l'arrière suivant une direction longitudinale dudit véhicule par une seconde partie (P2) coopérant avec ledit élément de couplage (EC) correspondant, de sorte que cette seconde partie soit décalée d'une distance choisie suivant une direction transversale dudit véhicule par rapport à ladite seconde face externe (FE2).

5. Véhicule selon l'une des revendications 1 à 4, **caractérisé en ce que** chaque second support (S2) comprend une seconde face externe (FE2), orientée vers ladite première face interne (FI1) du panneau latéral d'habillage (PLH) correspondant, et munie d'au moins deux premiers éléments de fixation (EF1) coopérant chacun avec un second élément de fixation (EF2) correspondant, défini sur ladite première face interne (FI1) du panneau latéral d'habillage (PLH) associé, pour participer à une immobilisation dudit second support (S2) par rapport à ce panneau latéral d'habillage (PLH) associé.

6. Véhicule selon la revendication 5, **caractérisé en ce que** chaque premier élément de fixation (EF1) fait partie intégrante de ladite seconde face externe (FE2) de son second support (S2) et est agencé sous la forme d'une patte de clippage clippée dans un trou de clippage constituant un second élément de fixation (EF2) correspondant.

7. Véhicule selon la revendication 5, **caractérisé en ce que** chaque premier élément de fixation (EF1) est rapporté fixement sur ladite seconde face externe (FE2) de son second support (S2) et est introduit dans un trou de clippage constituant un second élément de fixation (EF2) correspondant.

8. Véhicule selon l'une des revendications 1 à 7, **caractérisé en ce que** ladite seconde face externe (FE2) de chaque second support (S2) comprend dans une moitié supérieure au moins deux premiers éléments de fixation (EF1) et dans une moitié inférieure au moins deux autres premiers éléments de fixation (EF1).

9. Véhicule selon l'une des revendications précédentes, **caractérisé en ce qu'**il est de type automobile.

## Patentansprüche

1. Fahrzeug mit einem Kofferraum (CV), der an zwei inneren Längsseiten (CL) durch zwei seitliche Verkleidungsplatten (PLH) begrenzt ist, die erste Außenflächen (FE1) aufweisen, die jeweils zwei ersten Trägern (S1) und ersten Innenflächen (FI1) gegenüberliegen, die jeweils zwei zweiten Trägern (S2) gegenüberliegen, die eine Trägerplatte (PS) tragen, die geeignet ist, mindestens einen Gegenstand zu tragen, **dadurch gekennzeichnet, dass** jeder zweite Träger (S2) ein hinteres Ende (ER) aufweist, das mit mindestens einem Kopplungsvorsprung (PC) versehen ist, der durch ein entsprechendes Durchgangsloch (TT) hindurchquert, das definiert ist einen hinteren Teil (PR1) der zugeordneten seitlichen Verkleidungsplatte (PLH), der mit einem entsprechenden Kupplungselement (EC) zusammenwirkt, das in einem hinteren Teil (PR2) des zugeordneten ersten Trägers (S1) definiert ist, um an einer Fixierung des zweiten Trägers (S2) in Bezug auf den ersten Träger (S1) mitzuwirken.

2. Fahrzeug nach Anspruch 1, **dadurch gekennzeichnet, dass** das hintere Ende (ER) jedes zweiten Trägers (S2) mit zwei Kopplungsvorsprüngen (PC) versehen ist, die jeweils durch zwei entsprechende Durchgangslöcher (TT) verlaufen, die in dem hinteren Teil (PR1) der zugeordneten seitlichen Verkleidungsplatte (PLH) definiert sind, und jeweils mit zwei entsprechenden Kopplungselementen (EC) zusammenwirken, die in dem hinteren Teil (PR2) des ersten Trägers (S1) definiert sind.

3. Fahrzeug nach Anspruch 1 oder 2, **dadurch gekennzeichnet, dass** jeder Kopplungsvorsprung (PC) ein offenes Gehäuse (LO) aufweist, das einen Haltevorsprung (PRR) aufnimmt, der das entsprechende Kopplungselement (EC) aufweist.

4. Fahrzeug nach einem der Ansprüche 1 bis 3, **dadurch gekennzeichnet, dass** jeder Kopplungsvorsprung (PC) einen ersten Abschnitt (P1) umfasst, der auf einer zweiten Außenfläche (FE2) seines zweiten Trägers (S2) angebracht ist, der der ersten Innenfläche (FI1) der entsprechenden seitlichen Verkleidungsplatte (PLH) zugewandt ist und nach hinten in einer Längsrichtung des Fahrzeugs durch einen zweiten Abschnitt (P2) verlängert ist, der mit dem entsprechenden Kopplungselement (EC) zusammenwirkt, sodass dieser zweite Abschnitt um einen gewählten Abstand in einer Querrichtung des Fahrzeugs in Bezug auf die zweite Außenfläche versetzt ist (FE2).

5. Fahrzeug nach einem der Ansprüche 1 bis 4, **dadurch gekennzeichnet, dass** jeder zweite Träger (S2) eine zweite Außenfläche (FE2) aufweist, die der ersten Innenfläche (FI1) der entsprechenden seitlichen Verkleidungsplatte (PLH) zugewandt ist und mit mindestens zwei ersten Befestigungselementen (EF1) versehen ist, die jeweils mit einem entsprechenden zweiten Befestigungselement (EF2) zusammenwirken, das auf der ersten Innenfläche (FI1) der zugeordneten seitlichen Verkleidungsplatte (PLH) definiert ist, um an einer Unbeweglichkeit des zweiten Trägers (S2) in Bezug auf die zugeordnete seitliche Verkleidungsplatte (PLH) mitzuwirken.

6. Fahrzeug nach Anspruch 5, **dadurch gekennzeichnet, dass** jedes erste Befestigungselement (EF1) einstückig mit der zweiten Außenfläche (FE2) seines zweiten Trägers (S2) ausgebildet ist und in Form einer Einklemmlasche angeordnet ist, die in ein Einklemmloch eingeklemmt ist, das ein entsprechendes zweites Befestigungselement (EF2) bildet.

7. Fahrzeug nach Anspruch 5, **dadurch gekennzeichnet, dass** jedes erste Befestigungselement (EF1) fest an der zweiten Außenfläche (FE2) seines zweiten Trägers (S2) angebracht ist und in ein Klipsloch eingesetzt ist, das ein entsprechendes zweites Befestigungselement (EF2) bildet.

8. Fahrzeug nach einem der Ansprüche 1 bis 7, **dadurch gekennzeichnet, dass** die zweite Außenfläche (FE2) jedes zweiten Trägers (S2) in einer oberen Hälfte mindestens zwei erste Befestigungselemente (EF1) und in einer unteren Hälfte mindestens zwei weitere erste Befestigungselemente (EF1) aufweist.

9. Fahrzeug nach einem der vorhergehenden Ansprüche, **dadurch gekennzeichnet, dass** es ein Kraftfahrzeug ist.

## Claims

1. A vehicle comprising a trunk bounded on two inner longitudinal sides by two lateral trim panels having first outer faces placed opposite two first supports and first inner faces respectively placed opposite two second supports and each second support supporting a support sign adapted to support at least one object, wherein each second support comprises a rear end provided with at least one coupling protuberance passing through a corresponding through hole defined in a rear portion of the associated lateral trim panel and cooperating with a corresponding coupling item defined in a rear portion of the associated first support to participate in immobilisation of said second support report to said first support (S 1).

2. The vehicle according to claim 1, wherein said rear end of each second support is provided with two coupling protuberances passing respectively through two corresponding through holes defined in said rear portion of the associated side trim panel and co-operating respectively with two corresponding coupling items defined in said rear portion of the first support.

3. Vehicle according to Claim 1 or 2, wherein each coupling protuberance (PC) comprises an open housing (LO) housing a retained protuberance (PRR) comprised in said corresponding coupling item (EC).

4. Vehicle according to one of Claims 1 to 3, **characterised in that** each coupling protuberance (PC) comprises a first part (P1) erected on a second outer face (FE2) of its second support (S2), orientated towards said first inner face (FI1) of the corresponding lateral trim panel (PLH), and extended towards the rear along a longitudinal management of said vehicle by a second part (P2) cooperating with said corresponding coupling item (EC), so that this second part is offset by a chosen distance along a transverse management of said vehicle by report to said second outer face (FE2).

5. Vehicle according to one of Claims 1 to 4, **characterised in that** each second support (S2) comprises a second outer face (FE2), orientated towards said first inner face (FI1) of the corresponding lateral trim panel (PLH), and provided with at least two first fastening elements (EF 1) each cooperating with a corresponding second fastening element (EF 2), defined on said first inner face (FI1) of the associated lateral trim panel (PLH), to participate in immobilisation of said second support (S2) by report with this associated lateral trim panel (PLH).

6. Vehicle according to Claim 5, **characterised in that** each first fastening element (EF 1) forms an integral part of said second outer face (FE 2) of its second support (S 2) and is arranged in the shape of a clipping tab clipped into a clipping hole constituents a corresponding second fastening element (EF 2).

7. Vehicle according to Claim 5, wherein each first fastening element (EF 1) is fixedly attached to said second outer face (FE 2) of its second support (S 2) and is introduced into a constituent clipping hole a corresponding second fastening element (EF 2).

8. Vehicle according to one of Claims 1 to 7, **characterised in that** said second outer face (FE2) of each second support (S2) comprises in an upper half at least two first fastening elements (EF 1) and in a lower half at least two other first fastening elements (EF 1).

9. Vehicle according to one of the previous claims, wherein it is of the automobile type.
